# EUROPEAN PATENT SPECIFICATION

(11) **EP 3 934 327 B1**
(45) Date of publication and mention of the grant of the patent: **04.11.2026**
(21) Application number: 21192343.8
(22) Date of filing: 19.10.2017
(51) Int. Cl.: H04W 72/00, H04W 8/22, H04W 48/12

(54) **METHODS AND TERMINAL FOR CONTROLLING RESTRICTED UE CAPABILITY, AND COMPUTER STORAGE MEDIUM**
VERFAHREN UND TERMINAL ZUR STEUERUNG VON EINGESCHRÄNKTER UE-FÄHIGKEIT UND COMPUTERSPEICHERMEDIUM
PROCÉDÉS ET TERMINAL DE CONTRÔLE DE CAPACITÉ D'UE RESTREINTE, ET SUPPORT DE STOCKAGE INFORMATIQUE

(43) Date of publication of application: 05.01.2022
(62) Document number(s) of the earlier application(s) in accordance with Art. 76 EPC: 17929215.6 / 3 664 516
(73) Proprietor: GUANGDONG OPPO MOBILE TELECOMMUNICATIONS CORP., LTD., Dongguan, Guangdong 523860 (CN)
(72) Inventor: YANG, Ning, Dongguan, 523860 (CN)
(74) Representative: Manitz Finsterwald Patent- und Rechtsanwaltspartnerschaft mbB

(56) References cited:
- ZTE CORPORATION: "Consideration on the Temporary Capability Restriction", vol. RAN WG2, no. Berlin, Germany; 20170821 - 20170825, 20 August 2017 (2017-08-20), XP051318056, Retrieved from the Internet <URL:http://www.3gpp.org/ftp/Meetings_3GPP_SYNC/RAN2/Docs/> [retrieved on 20170820]
- SAMSUNG: "Network control of UE capability suspension", vol. RAN WG2, no. Berlin, Germany; 20170821 - 20170825, 20 August 2017 (2017-08-20), XP051319208, Retrieved from the Internet <URL:http://www.3gpp.org/ftp/Meetings_3GPP_SYNC/RAN2/Docs/> [retrieved on 20170820]
- HUAWEI ET AL: "UE temporary access capability restriction", vol. RAN WG2, no. Prague, Czech Republic; 20171009 - 20171013, 8 October 2017 (2017-10-08), XP051342391, Retrieved from the Internet <URL:http://www.3gpp.org/ftp/Meetings_3GPP_SYNC/RAN2/Docs/> [retrieved on 20171008]

## Description

### TECHNICAL FIELD

The present disclosure relates to the field of wireless communication technologies, and in particular, to a method for controlling a restricted User Equipment (UE) capability and a terminal.

### BACKGROUND

In order to meet the pursuit of speed, delay, high-speed mobility, energy efficiency and the diversity and complexity of services in the future, the 3rd Generation Partnership Project (3GPP) International Standards Organization has begun to develop the 5^{th} Generation (5G) mobile communication technology.

The main application scenarios of 5G mobile communication technology are: enhanced mobile broadband (eMBB), Ultra Reliable Low Latency Communication (URLLC), and massive machine type communication (mMTC).

The 5G mobile communication technology is also called Next Generation Wireless Communication Technology (NR, New Radio). When NR was deployed at early stage, it is difficult to achieve complete NR coverage, so the typical network coverage is combination of Long Term Evolution (LTE) coverage and NR coverage. In addition, in order to protect the previous investment of mobile operator in LTE, a tight interworking mode between LTE and NR is proposed.

When the UE encounters interference from other bands, or has problems such as device overheating, battery over-consumption, etc., the UE may temporarily change its own UE capability and report it to the base station, requesting the base station to use the restricted UE capability information (i.e., capability information of the restricted UE) to alleviate problems encountered by the UE. 3GPP Draft R2-1708153 by ZTE CORPORATION: "Consideration on the Temporary Capability Restriction", published on 20 August 2017, and 3GPP Draft R2-1709483 by Samsung: "Network control of UE capability suspension", published on 20 August 2017, disclose such prior art restriction of UE capability information. HUAWEI ET AL: "UE temporary access capability restriction", 3GPP DRAFT; R2-1710344 also discloses a process related to the UE temporary access capability restriction.

However, for the UE, there is no related solution to learn about whether a UE supports the temporary change of its own UE capability, and the operator cannot effectively control the UE capability of the UE.

### SUMMARY

The invention is set out in the appended set of claims. In order to solve the above technical problem, an embodiment of the present disclosure provides a method and an apparatus for controlling a restricted UE capability.

A method for controlling a restricted UE capability is provide according to claim 1.

A terminal is provided according to claim 4.

In some example of the present disclosure, the base station sends UE capability configuration information to a terminal, wherein the UE capability configuration information is used to indicate whether the terminal can send to the base station a request message requesting for using a restricted UE capability; and the base station sends to the terminal a response message confirming the use of the restricted UE capability when receiving the request message for using the restricted UE capability sent by the terminal. In some example, the base station notifies the terminal whether the terminal can initiate the request message for using the restricted UE capability through a broadcast signaling or a dedicated signaling, so it can achieve the objective of controlling the restricted UE capability for the operator.

### BRIEF DESCRIPTION OF THE DRAWINGS

The drawings described herein are intended to provide a further understanding of the present disclosure, and are intended to be a part of the present disclosure. The illustrative embodiments of the present disclosure and the description thereof are for explaining the present disclosure and do not constitute an undue limitation of the present disclosure. In the drawing:
FIG. 1 is a first schematic flowchart of a method for controlling a restricted UE capability according to an embodiment of the present disclosure;
FIG. 2 is a second schematic flowchart of a method for controlling a restricted UE capability according to an embodiment of the present disclosure;
FIG. 3 is a third schematic flowchart of a method for controlling a restricted UE capability according to an embodiment of the present disclosure;
FIG. 4 is a first schematic block diagram of an apparatus for controlling a restricted user equipment UE capability according to an embodiment of the present disclosure;
FIG. 5 is a second schematic block diagram of an apparatus for controlling a restricted user equipment UE capability according to an embodiment of the present disclosure;
FIG. 6 is a third schematic block diagram of an apparatus for controlling a restricted user equipment UE capability according to an embodiment of the present disclosure; and
FIG. 7 is a schematic block diagram of a base station according to an embodiment of the present disclosure.

### DETAILED DESCRIPTION

In order to understand the features and technical contents of the embodiments of the present disclosure in more detail, implementation of embodiments of the present disclosure will be described in detail below with reference to the accompanying drawings. The accompanying drawings are for illustrative purposes only and are not intended to limit the embodiments of the present disclosure.

The technical solution of the embodiment of the present disclosure is mainly applied to a 5G mobile communication system. Of course, the technical solution of the embodiment of the present disclosure is not limited to the 5G mobile communication system, and can also be applied to other types of mobile communication systems. The following describes the main application scenarios in the 5G mobile communication system.

1) The eMBB scenario. The eMBB aims to obtain multimedia content, services and data for users, and its business demands are growing rapidly. Because eMBB may be deployed in different scenarios, such as indoors, urban areas, and rural areas, the difference in service capabilities and requirements is relatively large. Therefore, services must be analyzed in combination with specific deployment scenarios.

2) The URLLC scenario. Typical applications of URLLC include: industrial automation, power automation, telemedicine operations, traffic security, and so on.

3) The mMTC scenario. Typical characteristics of URLLC include: high connection density, small data volume, delay-insensitive service, low cost and long service life of the module, and so on.

Regarding the UE capability acquisition architecture in the NR, the UE sends to the base station a request message for using the restricted UE capability, and the base station sends to the UE a response message confirming the use of the restricted UE capability. Then the UE and the base station communicate based on the restricted UE capability. It should be noted that this temporary restricted UE capability is transparent to the 5G core network (5GC, 5G Core), that is, only static UE capability information is stored in the 5GC.

In a specific implementation, the UE manufacturer can change the UE capability of the UE. From the perspective of the operator, the change of the UE capability needs to be implemented under the control of the network side, because the UE autonomously modifying its own UE capability may result in device instability, unpredictable UE behavior, additional signaling load, and user complaints.

In order to achieve the objective of controlling the UE capability, the embodiment of the present disclosure provides a method for controlling the restricted UE capability, and specifically, the method for the base station to control the capability of the UE to use the restricted UE.

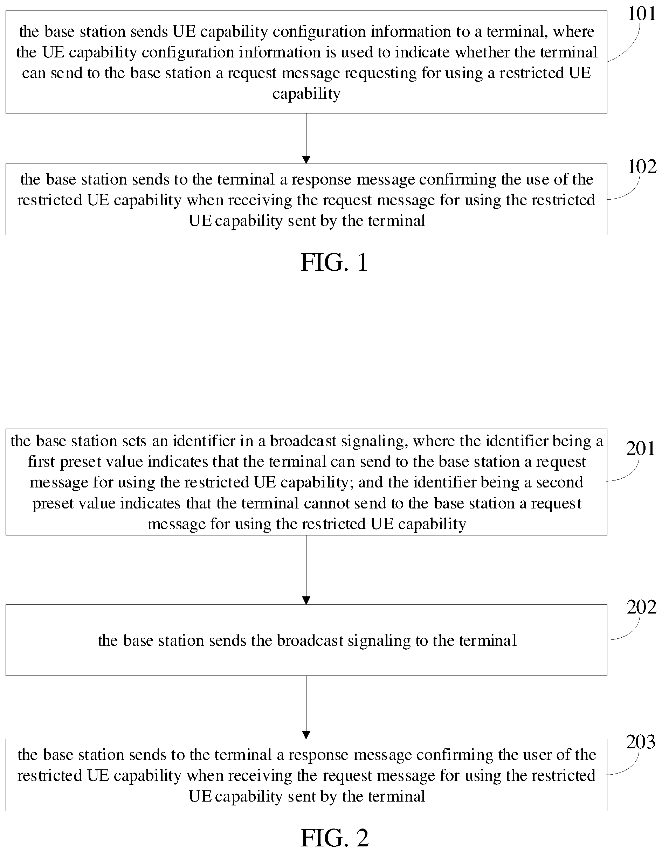

FIG. 1 is a first schematic flowchart of a method for controlling a restricted UE capability according to an embodiment of the present disclosure. As shown in FIG. 1, the method for controlling a UE capability includes the following steps.

At step 101, the base station sends UE capability configuration information to a terminal, wherein the UE capability configuration information is used to indicate whether the terminal can send to the base station a request message requesting for using a restricted UE capability.

In the embodiment of the present disclosure, the terminal may be any type of terminal, such as a mobile phone, a tablet computer, a notebook, an in-vehicle terminal, a smart home appliance, a terminal in an industrial field, and the like. The base station can be any type of base station, such as an eNB in LTE, a gNB in NR, and the like.

In the embodiment of the present disclosure, the base station sending UE capability configuration information to a terminal may be implemented as follows.

Implementation 1: the base station sends a broadcast signaling to the terminal, wherein the broadcast signaling carries the UE capability configuration information.

Implementation 2: the base station sends a dedicated signaling to the terminal, wherein the dedicated signaling carries the UE capability configuration information.

Here, the dedicated signaling includes at least: RRC signaling, or MAC CE signaling, or PDCCH signaling.

At step 102, the base station sends to the terminal a response message confirming the use of the restricted UE capability when receiving the request message for using the restricted UE capability sent by the terminal.

After receiving the UE capability configuration information sent by the base station, the terminal determines, according to the UE capability configuration information, whether the terminal can send to the base station a request message for using the restricted UE capability. If the terminal determines that the request message for using the restricted UE capability can be sent to the base station, the terminal sends to the base station a request message for using the restricted UE capability when the device is overheated. After receiving the request message for using the restricted UE capability sent by the terminal, the base station returns to the terminal a response message confirming the use of the restricted UE capability.

FIG. 2 is a second schematic flowchart of a method for controlling a restricted UE capability according to an embodiment of the present disclosure. As shown in FIG. 2, the method for controlling a restricted UE capability includes the following steps.

At step 201, the base station sets an identifier in a broadcast signaling, wherein the identifier being a first preset value indicates that the terminal can send to the base station a request message for using the restricted UE capability; and the identifier being a second preset value indicates that the terminal cannot send to the base station a request message for using the restricted UE capability.

In the embodiment of the present disclosure, the UE capability configuration information is implemented by an identifier in a broadcast signaling. In an implementation, a flag is set in the broadcast signaling to indicate whether the UE can send to the base station a request message for using the restricted UE capability.

For example, flag=1 indicates that the terminal can send to the base station a request message for using the restricted UE capability; flag=0 indicates that the terminal cannot send to the base station the request message for using the restricted UE capability.

To ensure the service experience of the high-end user, the base station sets an identifier in the broadcast signaling according to the access level information of the terminal or priority information of the user. In an implementation, an identifier corresponding to each access level (AC, Access Class) is set by respectively using N bits in the broadcast signaling, wherein the identifier being a first preset value represents that a terminal that matches the corresponding access level can send to the base station a request message for using the restricted UE capability; the identifier being a second preset value represents that a terminal that matches the corresponding access level cannot send to the base station a request message for using the restricted UE capability, and N is a positive integer.

Here, a flag is configured for the AC of each terminal. For multiple ACs, all corresponding flags form an AC bitmap. It is assumed that the AC bitmap includes N bits, and each bit corresponds to one AC. For example, the first bit corresponds to AC=0, the second bit corresponds to AC=1, so on so forth, and the Nth bit corresponds to AC=N-1. If the first bit is set to 0, the user with AC=0 cannot send to the base station a request message for using the restricted UE capability. If the second bit is set to 1, the user with AC = 1 can send to the base station a request message for using the restricted UE capability.

Table 1 is a relationship between the AC bitmap and the restricted UE capabilities. As shown in Table 1, after receiving the broadcast signaling, the terminal searches for the flag corresponding to its own AC value in the AC bitmap from the broadcast signaling according to its own AC value, and determines whether a request message for using the restricted UE capability can be sent to the base station. For example, the AC value of the terminal is 3, and the corresponding flag is determined to be 1 based on the broadcast signaling. Therefore, the terminal can send to the base station a request message for using the restricted UE capability.

**Table 1**

| AC bitmap | 1 | 0 | 1 | 1 | 0 | 0 |
|---|---|---|---|---|---|---|
| AC Value | 0 | 1 | 2 | 3 | 4 | 5 |
| Whether the terminal corresponding to the AC value can send to the base station a request message for using the restricted UE capability | Can | Cannot | Can | Can | Cannot | Cannot |

In an implementation, the broadcast signaling further carries configuration area information, wherein the configuration area information is used to indicate an applicable range of the UE capability configuration information, and the applicable range of the UE capability configuration information includes at least one of: a cell, a base station or a network PLMN.

When the applicable range of the UE capability configuration information is PLMNs, the broadcast signaling further carries a PLMN list.

When the applicable range of the UE capability configuration information is cells, the broadcast signaling further carries a cell list.

When the applicable range of the UE capability configuration information is base stations, the broadcast signaling further carries a base station list.

In the embodiment of the present disclosure, if the applicable range of the UE capability configuration information is the cell, after the terminal changes the cell, the UE capability configuration information corresponding to the terminal is deleted.

If the applicable range of the UE capability configuration information is the base station, after the terminal changes the base station, the UE capability configuration information corresponding to the terminal is deleted.

If the applicable range of the UE capability configuration information is the cell, when the terminal is located in a PLMN other than those in the PLMN list, the UE capability configuration information corresponding to the terminal is deleted.

At step 202, the base station sends the broadcast signaling to the terminal.

Here, the broadcast signaling carries the UE capability configuration information set as in step 201.

At step 203, the base station sends to the terminal a response message confirming the user of the restricted UE capability when receiving the request message for using the restricted UE capability sent by the terminal.

After receiving the broadcast signaling sent by the base station, the terminal determines, according to the broadcast signaling, whether the terminal can send to the base station a request message for using the restricted UE capability. If the terminal determines that the request message for using the restricted UE capability can be sent to the base station, the terminal sends a request message for using the restricted UE capability to the base station when the device is overheated. After receiving the request message for using the restricted UE capability sent by the terminal, the base station returns to the terminal a response message confirming the use of the restricted UE capability.

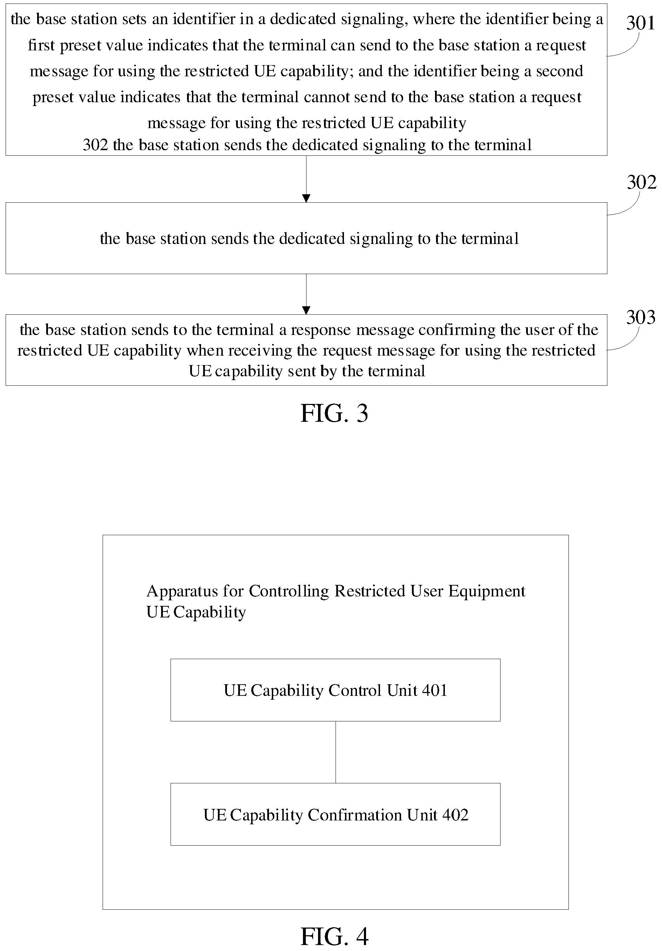

FIG. 3 is a third schematic flowchart of a method for controlling a restricted UE capability according to an embodiment of the present disclosure. As shown in FIG. 3, the method for controlling a UE capability includes the following steps.

At step 301, the base station sets an identifier in a dedicated signaling, wherein the identifier being a first preset value indicates that the terminal can send to the base station a request message for using the restricted UE capability; and the identifier being a second preset value indicates that the terminal cannot send to the base station a request message for using the restricted UE capability.

In the embodiment of the present disclosure, the UE capability configuration information is implemented by an identifier in a dedicated signaling. In an implementation, a flag is set in the dedicated signaling to indicate whether the UE can send to the base station a request message for using the restricted UE capability.

For example, flag=1 indicates that the terminal can send to the base station a request message for using the restricted UE capability; flag=0 indicates that the terminal cannot send to the base station the request message for using the restricted UE capability.

In the embodiment of the present disclosure, the dedicated signaling includes at least: an RRC signaling, or an MAC CE signaling, or a PDCCH signaling.

In an implementation, the dedicated signaling further carries configuration area information, wherein the configuration area information is used to indicate an applicable range of the UE capability configuration information, and the applicable range of the UE capability configuration information includes at least one of: a cell, a base station or a PLMN.

When the applicable range of the UE capability configuration information is PLMNs, the dedicated signaling further carries a PLMN list.

When the applicable range of the UE capability configuration information is cells, the dedicated signaling further carries a cell list.

When the applicable range of the UE capability configuration information is base stations, the dedicated signaling further carries a base station list.

In the embodiment of the present disclosure, if the applicable range of the UE capability configuration information is the cell, after the terminal changes the cell, the UE capability configuration information corresponding to the terminal is deleted.

If the applicable range of the UE capability configuration information is the base station, after the terminal changes the base station, the UE capability configuration information corresponding to the terminal is deleted.

If the applicable range of the UE capability configuration information is the cell, when the terminal is located in a PLMN other than those in the PLMN list, the UE capability configuration information corresponding to the terminal is deleted.

At step 302, the base station sends the dedicated signaling to the terminal.

Here, the dedicated signaling carries the UE capability configuration information set as in step 301.

At step 303, the base station sends to the terminal a response message confirming the user of the restricted UE capability when receiving the request message for using the restricted UE capability sent by the terminal.

After receiving the dedicated signaling sent by the base station, the terminal determines, according to the dedicated signaling, whether the terminal can send to the base station a request message for using the restricted UE capability. If the terminal determines that the request message for using the restricted UE capability can be sent to the base station, the terminal sends a request message for using the restricted UE capability to the base station when the device is overheated. After receiving the request message for using the restricted UE capability sent by the terminal, the base station returns to the terminal a response message confirming the use of the restricted UE capability.

Although not being part of the invention, the following examples shown in Figs. 4-7 are provided for highlighting specific aspects of the subject-matter. FIG. 4 is a first schematic block diagram of an apparatus for controlling a restricted user equipment UE capability according to an embodiment of the present disclosure. As shown in FIG. 4, the apparatus for controlling a restricted user equipment UE capability includes:
a UE capability control unit 401 configured to send UE capability configuration information to a terminal, wherein the UE capability configuration information is used to indicate whether the terminal can send to the base station a request message requesting for using a restricted UE capability; and
a UE capability confirmation unit 402 configured to send to the terminal a response message confirming the use of the restricted UE capability when receiving the request message for using the restricted UE capability sent by the terminal.

It should be understood by those skilled in the art that the function achieved by each unit in the apparatus for controlling a restricted user equipment UE capability shown in FIG. 4 can be understood by referring to the related description of the above method for controlling a restricted user equipment UE capability. The function of each unit in the apparatus for controlling a restricted user equipment UE capability shown in FIG. 4 can be achieved by a program running on a processor, or may be implemented by a specific logic circuit.

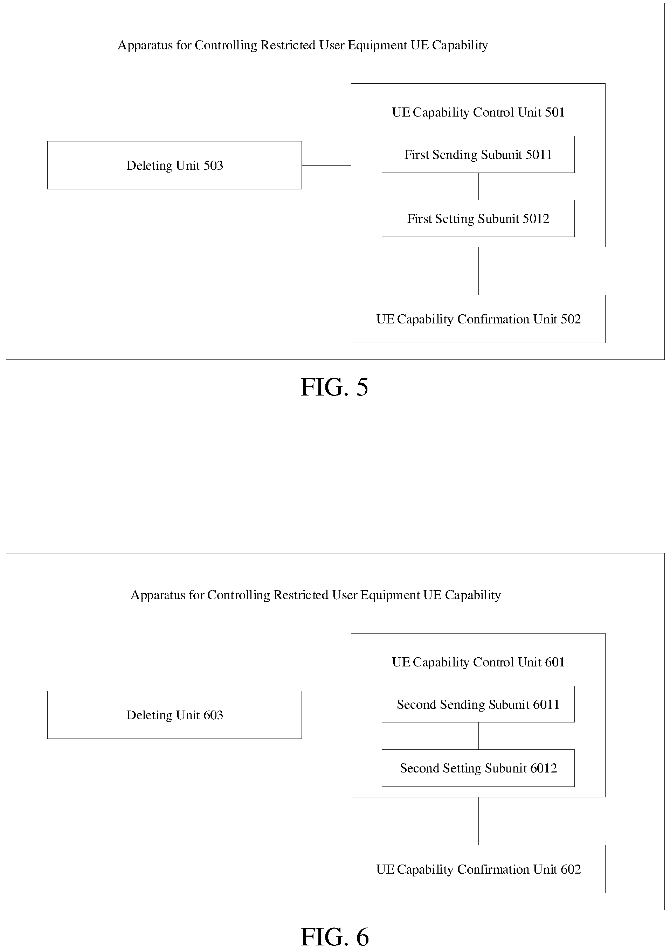

FIG. 5 is a second schematic block diagram of an apparatus for controlling a restricted user equipment UE capability according to an embodiment of the present disclosure. As shown in FIG. 5, the apparatus for controlling a restricted user equipment UE capability includes:
a UE capability control unit 501 configured to send UE capability configuration information to a terminal, wherein the UE capability configuration information is used to indicate whether the terminal can send to the base station a request message requesting for using a restricted UE capability; and
a UE capability confirmation unit 502 configured to send to the terminal a response message confirming the use of the restricted UE capability when receiving the request message for using the restricted UE capability sent by the terminal.

The UE capability control unit 501 includes:
a first sending subunit 5011 configured to send a broadcast signaling to the terminal, wherein the broadcast signaling carries the UE capability configuration information.

The UE capability control unit 501 further includes:
a first setting subunit 5012 configured to set an identifier in the broadcast signaling, wherein the identifier being a first preset value indicates that the terminal can send to the base station a request message for using the restricted UE capability; and the identifier being a second preset value indicates that the terminal cannot send to the base station a request message for using the restricted UE capability.

The first setting subunit 5012 is further configured to set an identifier corresponding to each access level by respectively using N bits in the broadcast signaling, wherein the identifier being a first preset value represents that a terminal that matches the corresponding access level can send to the base station a request message for using the restricted UE capability; the identifier being a second preset value represents that a terminal that matches the corresponding access level cannot send to the base station a request message for using the restricted UE capability, and N is a positive integer.

In an implementation, the broadcast signaling further carries configuration area information, wherein the configuration area information is used to indicate an applicable range of the UE capability configuration information, and the applicable range of the UE capability configuration information includes at least one of: a cell, a base station or a PLMN.

When the applicable range of the UE capability configuration information is PLMNs, the broadcast signaling further carries a PLMN list.

When the applicable range of the UE capability configuration information is cells, the broadcast signaling further carries a cell list.

When the applicable range of the UE capability configuration information is base stations, the broadcast signaling further carries a base station list.

In an implementation, the apparatus further includes:
a deleting unit 503 configured to, if the applicable range of the UE capability configuration information is the cell, after the terminal changes the cell, delete the UE capability configuration information corresponding to the terminal; if the applicable range of the UE capability configuration information is the base station, after the terminal changes the base station, delete the UE capability configuration information corresponding to the terminal; and if the applicable range of the UE capability configuration information is the cell, when the terminal is located in a PLMN other than those in the PLMN list, delete the UE capability configuration information corresponding to the terminal.

It should be understood by those skilled in the art that the function achieved by each unit in the apparatus for controlling a restricted user equipment UE capability shown in FIG. 5 can be understood by referring to the related description of the above method for controlling a restricted user equipment UE capability. The function of each unit in the apparatus for controlling a restricted user equipment UE capability shown in FIG. 5 can be achieved by a program running on a processor, or may be implemented by a specific logic circuit.

FIG. 6 is a third schematic block diagram of an apparatus for controlling a restricted user equipment UE capability according to an embodiment of the present disclosure. As shown in FIG. 6, the apparatus for controlling a restricted user equipment UE capability includes:
a UE capability control unit 601 configured to send UE capability configuration information to a terminal, wherein the UE capability configuration information is used to indicate whether the terminal can send to the base station a request message requesting for using a restricted UE capability; and
a UE capability confirmation unit 602 configured to send to the terminal a response message confirming the use of the restricted UE capability when receiving the request message for using the restricted UE capability sent by the terminal.

The UE capability control unit 601 includes:
a second sending subunit 6011 configured to send a dedicated signaling to the terminal, wherein the dedicated signaling carries the UE capability configuration information.

In an implementation, the dedicated signaling includes at least: RRC signaling, or MAC CE signaling, or PDCCH signaling.

The UE capability control unit 601 further includes:
a second setting subunit 6012 configured to set an identifier in the dedicated signaling, wherein the identifier being a first preset value indicates that the terminal can send to the base station a request message for using the restricted UE capability; and the identifier being a second preset value indicates that the terminal cannot send to the base station a request message for using the restricted UE capability.

In an implementation, the dedicated signaling further carries configuration area information, wherein the configuration area information is used to indicate an applicable range of the UE capability configuration information, and the applicable range of the UE capability configuration information includes at least one of: a cell, a base station or a PLMN.

When the applicable range of the UE capability configuration information is PLMNs, the dedicated signaling further carries a PLMN list.

When the applicable range of the UE capability configuration information is cells, the dedicated signaling further carries a cell list.

When the applicable range of the UE capability configuration information is base stations, the dedicated signaling further carries a base station list.

In an implementation, the apparatus further includes:
a deleting unit 603 configured to, if the applicable range of the UE capability configuration information is the cell, after the terminal changes the cell, delete the UE capability configuration information corresponding to the terminal; if the applicable range of the UE capability configuration information is the base station, after the terminal changes the base station, delete the UE capability configuration information corresponding to the terminal; and if the applicable range of the UE capability configuration information is the cell, when the terminal is located in a PLMN other than those in the PLMN list, delete the UE capability configuration information corresponding to the terminal.

It should be understood by those skilled in the art that the function achieved by each unit in the apparatus for controlling a restricted user equipment UE capability shown in FIG. 6 can be understood by referring to the related description of the above method for controlling a restricted user equipment UE capability. The function of each unit in the apparatus for controlling a restricted user equipment UE capability shown in FIG. 6 can be achieved by a program running on a processor, or may be implemented by a specific logic circuit.

In the embodiments of the present disclosure, if the apparatus for controlling a restricted user equipment UE capability is implemented in the form of modules of software function and sold or used as a standalone product, it may also be stored in a computer readable storage medium. Based on such understanding, the technical solution of the embodiments of the present disclosure may be embodied in the form of a software product in essence or in the form of a software product stored in a storage medium, including a plurality of instructions to cause a computer device (which may be a personal computer, a server, or a network device, etc.) to perform all or part of the methods described in various embodiments of the present disclosure. The above storage medium includes various media that can store program codes, such as a USB flash drive, a mobile hard disk, a read only memory (ROM), a magnetic disk, or an optical disk. Thus, embodiments of the present disclosure are not limited to any specific combination of hardware and software.

Correspondingly, an embodiment of the present disclosure further provides a computer storage medium storing a computer program, and the computer program is configured to execute the method for controlling a restricted user equipment UE capability according to the embodiment of the present disclosure.

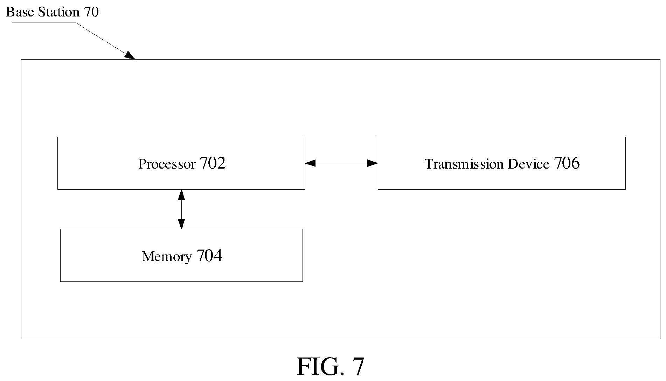

FIG. 7 is a schematic block diagram of a base station according to an embodiment of the present disclosure. As shown in FIG. 7, the base station 70 may include one or more (only one shown) processors 702 (the processor 702 may include but not limited to a processing device such as a Micro Controller Unit (MCU) or a Field Programmable Gate Array (FPGA)), a memory 704 for storing data, and a transmission device 706 for communication functions. It will be understood by those skilled in the art that the structure shown in FIG. 7 is merely illustrative and does not limit the structure of the above electronic device. For example, the base station 70 may also include more or fewer components than shown in FIG. 7, or have a different configuration than that shown in FIG. 7.

The memory 704 can be used to store software programs and modules of the application software, such as program instructions/modules corresponding to the method for controlling a restricted user equipment UE capability in the embodiment of the present disclosure, and the processor 702 runs the software program and modules stored in the memory 704, thus performing various functional applications and data processing, to implement the above method. The memory 704 can include a high-speed random access memory and can also include a nonvolatile memory, such as one or more magnetic storage devices, flash memories, or other nonvolatile solid state memories. In some examples, memory 704 can further include memory remotely located relative to processor 702, which can be connected to base station 70 over a network. Examples of such networks include, but not limited to, the Internet, intranets, local area networks, mobile communication networks, and combinations thereof.

The transmission device 706 is for receiving or transmitting data via a network. The specific examples of networks described above may include a wireless network provided by a communication provider of the base station 70. In one example, the transmission device 706 includes a network interface controller (NIC) that can be connected to other network devices through the base station to communicate with the Internet. In one example, the transmission device 706 can be a radio frequency (RF) module for communicating with the Internet wirelessly.

The technical solutions described in the embodiments of the present disclosure can be combined as desired without conflict.

In the several embodiments provided by the present disclosure, it should be understood that the disclosed method and smart device may be implemented in other manners. The apparatus embodiments described above are merely illustrative. For example, the division of the units is only a logical function division. In actual implementation, there may be another division manner, such as: multiple units or components may be combined, or may be integrated into another system, or some features can be ignored or not executed. In addition, the coupling, or direct coupling, or communication connection of the components shown or discussed may be indirect coupling or communication connection through some interfaces, devices or units, and may be electrical, mechanical or in other forms.

The units described above as separate components may or may not be physically separated, and the components displayed as the unit may or may not be physical units, that is, may be located in one place or distributed to multiple network units. Some or all of the units may be selected according to actual needs to achieve the objective of the solution of the embodiment.

In addition, each functional unit in each embodiment of the present disclosure may be integrated into one second processing unit, or each unit may be separately used as one unit, or two or more units may be integrated into one unit. The above integrated unit can be implemented in the form of hardware or in the form of hardware plus software functional units.

## Claims

1. A method for controlling a restricted UE capability, comprising:
receiving, by a terminal, UE capability configuration information sent from a base station, wherein the UE capability configuration information is used to indicate whether the terminal can send to the base station a request message for using the restricted UE capability; and
when the UE capability configuration information indicating that the terminal can send to the base station the request message, sending, by the terminal, the request message for using the restricted UE capability to the base station when the terminal is overheated.

2. The method for controlling the restricted UE capability according to claim 1, wherein the receiving, by the terminal, UE capability configuration information sent from the base station comprises:
receiving, by the terminal, a dedicated signaling from the base station, wherein the dedicated signaling carries the UE capability configuration information.

3. The method for controlling the restricted UE capability according to claim 2, wherein the dedicated signaling comprises at least: a radio resource control, RRC, signaling, or a medium access control control element, MAC CE, signaling, or a physical downlink control channel, PDCCH, signaling.

4. A terminal adapted to:
receive UE capability configuration information sent from a base station, wherein the UE capability configuration information is used to indicate whether the terminal can send to the base station a request message for using the restricted UE capability; and
when the UE capability configuration information indicating that the terminal can send to the base station the request message, send the request message for using the restricted UE capability to the base station when the terminal is overheated.

5. The terminal according to claim 4, wherein the terminal is further adapted to:
receive a dedicated signaling from the base station, wherein the dedicated signaling carries the UE capability configuration information.

6. The terminal according to claim 5, wherein the dedicated signaling comprises at least: a radio resource control, RRC, signaling, or a medium access control control element, MAC CE, signaling, or a physical downlink control channel, PDCCH, signaling.

## Patentansprüche

1. Verfahren zur Steuerung einer eingeschränkten UE-Fähigkeit, umfassend:
Empfangen, durch ein Endgerät, von UE-Fähigkeitskonfigurationsinformationen, die von einer Basisstation gesendet werden, wobei die UE-Fähigkeitskonfigurationsinformationen dazu verwendet werden, anzuzeigen, ob das Endgerät an die Basisstation eine Anforderungsnachricht zur Nutzung der eingeschränkten UE-Fähigkeit senden kann; und
wenn die UE-Fähigkeitskonfigurationsinformationen anzeigen, dass das Endgerät an die Basisstation die Anforderungsnachricht senden kann, Senden, durch das Endgerät, der Anforderungsnachricht zur Nutzung der eingeschränkten UE-Fähigkeit an die Basisstation, wenn das Endgerät überhitzt ist.

2. Verfahren zur Steuerung der eingeschränkten UE-Fähigkeit nach Anspruch 1, wobei das Empfangen, durch das Endgerät, von UE-Fähigkeitskonfigurationsinformationen, die von der Basisstation gesendet werden, umfasst:
Empfangen, durch das Endgerät, einer dedizierten Signalisierung von der Basisstation, wobei die dedizierte Signalisierung die UE-Fähigkeitskonfigurationsinformationen trägt.

3. Verfahren zur Steuerung der eingeschränkten UE-Fähigkeit nach Anspruch 2, wobei die dedizierte Signalisierung mindestens umfasst: eine Funkressourcensteuerungs-, RRC-, Signalisierung, oder eine Medienzugriffssteuerungs-Steuerelement-, MAC-CE-, Signalisierung, oder eine Physische-Abwärtsstreckensteuerkanal-, PDCCH-, Signalisierung.

4. Endgerät, das dazu eingerichtet ist:
UE-Fähigkeitskonfigurationsinformationen zu empfangen, die von einer Basisstation gesendet werden, wobei die UE-Fähigkeitskonfigurationsinformationen dazu verwendet werden, anzuzeigen, ob das Endgerät an die Basisstation eine Anforderungsnachricht zur Nutzung der eingeschränkten UE-Fähigkeit senden kann; und
wenn die UE-Fähigkeitskonfigurationsinformationen anzeigen, dass das Endgerät an die Basisstation die Anforderungsnachricht senden kann, die Anforderungsnachricht zur Nutzung der eingeschränkten UE-Fähigkeit an die Basisstation zu senden, wenn das Endgerät überhitzt ist.

5. Endgerät nach Anspruch 4, wobei das Endgerät ferner dazu eingerichtet ist:
eine dedizierte Signalisierung von der Basisstation zu empfangen, wobei die dedizierte Signalisierung die UE-Fähigkeitskonfigurationsinformationen trägt.

6. Endgerät nach Anspruch 5, wobei die dedizierte Signalisierung mindestens umfasst: eine Funkressourcensteuerungs-, RRC-, Signalisierung, oder eine Medienzugriffssteuerungs-Steuerelement-, MAC-CE-, Signalisierung, oder eine Physische-Abwärtsstreckensteuerkanal-, PDCCH-, Signalisierung.

## Revendications

1. Procédé de contrôle d'une capacité d'UE restreinte, comprenant :
la réception, par un terminal, d'informations de configuration de capacité d'UE envoyées par une station de base, dans lequel les informations de configuration de capacité d'UE sont utilisées pour indiquer si le terminal peut envoyer à la station de base un message de demande d'utilisation de la capacité d'UE restreinte ; et
lorsque les informations de configuration de capacité d'UE indiquent que le terminal peut envoyer à la station de base le message de demande, l'envoi, par le terminal, du message de demande d'utilisation de la capacité d'UE restreinte à la station de base lorsque le terminal est en surchauffe.

2. Procédé de contrôle de la capacité d'UE restreinte selon la revendication 1, dans lequel la réception, par le terminal, d'informations de configuration de capacité d'UE envoyées par la station de base comprend :
la réception, par le terminal, d'une signalisation dédiée provenant de la station de base, dans lequel la signalisation dédiée transporte les informations de configuration de capacité d'UE.

3. Procédé de contrôle de la capacité d'UE restreinte selon la revendication 2, dans lequel la signalisation dédiée comprend au moins : une signalisation de contrôle de ressources radio, RRC, ou une signalisation d'élément de contrôle de contrôle d'accès au support, MAC CE, ou une signalisation de canal de contrôle de liaison descendante physique, PDCCH.

4. Terminal adapté pour :
recevoir des informations de configuration de capacité d'UE envoyées par une station de base, dans lequel les informations de configuration de capacité d'UE sont utilisées pour indiquer si le terminal peut envoyer à la station de base un message de demande d'utilisation de la capacité d'UE restreinte ; et
lorsque les informations de configuration de capacité d'UE indiquent que le terminal peut envoyer à la station de base le message de demande, envoyer le message de demande d'utilisation de la capacité d'UE restreinte à la station de base lorsque le terminal est en surchauffe.

5. Terminal selon la revendication 4, dans lequel le terminal est en outre adapté pour :
recevoir une signalisation dédiée provenant de la station de base, dans lequel la signalisation dédiée transporte les informations de configuration de capacité d'UE.

6. Terminal selon la revendication 5, dans lequel la signalisation dédiée comprend au moins : une signalisation de contrôle de ressources radio, RRC, ou une signalisation d'élément de contrôle de contrôle d'accès au support, MAC CE, ou une signalisation de canal de contrôle de liaison descendante physique, PDCCH.
